# EUROPÄISCHE PATENTANMELDUNG

(11) **EP 2 759 580 A1**
(43) Veröffentlichungstag der Anmeldung: **30.07.2014**
(21) Anmeldenummer: 13002778.2
(22) Anmeldetag: 29.05.2013
(51) Int. Cl.: C09J 177/00, B32B 5/26, B32B 7/12, B32B 15/088, B32B 17/06, B32B 21/08, B32B 21/10, B32B 27/06, B32B 27/12, B32B 27/34, C08J 5/12

(54) **Faserverbundwerkstoff-Hybridbauteile**

(30) Priorität: 29.01.2013 DE 102013201388
(71) Anmelder: Evonik Industries AG, 45128 Essen (DE)
(72) Erfinder: Gruhn, Maximilian, 45770 Marl (DE); Kuhmann, Karl, 48249 Dülmen (DE); Risthaus, Martin, 59399 Olfen (DE)

(57) **Zusammenfassung**

Die Erfindung betrifft Hybridbauteile umfassend mindestens einen Fasenrerbundwerkstoff als Werkstoff B und mindestens eine Werkstoff A. Der Werkstoff A ist ausgewählt aus Kunststoffen, Metallen, keramischen Massen, Holz, Glas, Verbundwerkstoffen, textilen Fasern und aus textilen Fasern hergestellten Fertigfabrikaten. Der Werkstoff A ist mit dem Werkstoff B durch mindestens eine Beschichtung einer Haftvermittler-Zusammensetzung, die mindestens einen Schmelzklebstoff auf Copolyamidbasis enthält, verbunden.

## Beschreibung

Die vorliegende Erfindung betrifft Hybridbauteile, Verfahren zu ihrer Herstellung und ihre Verwendung sowie die Verwendung von Haftvermittler-Zusammensetzungen.

Hybridbauteile des Standes der Technik aus Kunststoff und Metall sind Komponenten, die unter anderem im Fahrzeugbau und im Flugzeugbau sowie in der Elektronik und der Elektrotechnik als auch im Bereich Sport und Lifestyle im Bereich tragender Teile, kraftaufnehmender Teile oder als Teil des Gehäuses, bspw. für dekorative Zwecke, zum Einsatz kommen. Sie zeichnen sich insbesondere dadurch aus, dass sie lokale Verstärkungen aufweisen, die dem Bauteil besondere mechanische Eigenschaften verleihen, und/oder die Möglichkeit zur Funktionsintegration bieten. Besonders hervorzuheben ist die Erhöhung der Bauteilsteifigkeit bei zusätzlicher Gewichtsreduzierung im Vergleich zu bisher eingesetzten Komponenten in konventioneller Bauweise,

In den zuvor genannten Einsatzgebieten werden zunehmend Hybridbauteile eingesetzt, um eine Verringerung der Masse bei gleichzeitig optimierten mechanischen Eigenschaften zu erhalten. Der Nachteil dieser Hybridbauteile liegt in der fehlenden bzw. unzureichenden Haftung zwischen Metall und Kunststoff. Insofern wurden bisher mechanische Verankerungen des Kunststoffs am Metall durchgeführt.

Die Haftung zwischen Metall und Kunststoff kann durch Haftvermittler verbessert werden. Aus EP-A-1808468 und EP-A-2435246 sind Hybridbauteile bekannt, wobei Metall und Kunststoff durch Schmelzklebstoffe als Haftvermittler auf Copolyamid-Basis, die zusätzlich Isocyanat- und Epoxidgruppen enthalten, verbunden sind.

Der anhaltende Trend zu immer leichteren Strukturen bei gleichbleibender oder erhöhter Steifigkeit führt zu einem verstärkten Einsatz thermoplastischer Faserverbundwerkstoffe ("Composites") innerhalb der etablierten Kunststoff und/oder Metallstrukturen.

Auch bei Faserverbundwerkstoffen werden üblicherweise form- und/oder kraftschlüssige Verbindungselemente wie z.B. Durchspritzpunkte, Umspritzungen, Nieten, Schrauben, Igelstrukturen (beispielsweise T-Igel) etc. vorgenommen.

Der Nachteil form- und/oder kraftschlüssiger Verbindungselemente gegenüber stoffschlüssigen Elementen ist die lokal begrenzte Krafteinleitung. Zudem beeinflussen die erforderlichen Durchbrüche im Material die Kraftaufnahme und -verteilung.

Eine verbesserte Kraftübertragung bzw. -einleitung zwischen Werkstoffen kann durch stoffschlüssige Verbindungen erfolgen. Dabei kann auf Durchbrüche im Material, welche dieses schwächen, verzichtet werden, die beispielsweise für einen Formschluss notwendig sind. Eine stoffschlüssige Verbindung zwischen Faserverbundwerkstoffen und einem Kunststoff lässt sich im Spritzguss jedoch nur bei artgleichen oder besonders verträglichen Materialkombinationen etablieren, was die Auswahl an potentiellen Verbundpartnem stark einschränkt. Die Qualität der Verbindung hängt dabei entscheidend von den eingesetzten Prozessbedingungen (Temperatur, Zeit und Druck) ab. Alternativ kann eine stoffschlüssige Verbindung durch Schweißen oder einen geeigneten Haftvermittler, etwa auf Polyurethan-Basis, erzeugt werden.

Aufgabe der vorliegenden Erfindung war daher, ein Hybridbauteil umfassend mindestens einen Faserverbundwerkstoff zur Verfügung zu stellen, das durch stoffschlüssige Verbindung erhalten werden kann. Hierdurch sollte eine besonders hohe Haftung zwischen den jeweiligen, üblicherweise artfremden, Werkstoffen erzielt werden. Es sollte ein Hybridbauteil erhalten werden, dass gegenüber den bekannten Hybridbauteilen aus Metall und Kunststoff eine erhöhte Steifigkeit und/oder ein verringertes Gewicht bei zumindest annähernd gleichhoher Haftung aufweist.

Eine artgleiche Verbindung ist beispielsweise eine Verbindung zwischen Polyamid 12 und Polyamid 12 oder Stahl und Stahl. Eine artfremde Verbindung hingegen stellen beispielsweise die Kombinationen Stahl und Aluminium, Stahl und Polyamid 6 oder Polyamid 12 und Polyamid 6 dar. Die Begriffe "artfremd" und "artgleich" sind dem Fachmann bekannt.

Überraschend wurde gefunden, dass eine Beschichtung mit einer Haftvermittler-Zusammensetzung dazu führt, dass der Faserverbundwerkstoff mit Werkstoffen A stoffschlüssig unter Erhalt eines Hybridbauteils miteinander verbunden werden kann.

Gegenstand der vorliegenden Erfindung ist demnach ein Hybridbauteil umfassend mindestens einen Faserverbundwerkstoff als Werkstoff B und mindestens einen Werkstoff A, wobei der Werkstoff A ausgewählt ist aus Kunststoffen, Metallen, keramischen Massen, Holz, Glas, Verbundwerkstoffen, textilen Fasern und aus textilen Fasern hergestellten Fertigfabrikaten. Die Materialien sind durch mindestens eine Beschichtung einer Haftvermittler-Zusammensetzung miteinander verbunden, wobei die Zusammensetzung mindestens einen Schmelzklebstoff auf Copolyamidbasis enthält.

Faserverbundwerkstoffe als Werkstoff B und Werkstoffe A zusammen werden im Folgenden als Werkstoffe bezeichnet.

Verbundwerkstoffe (Kompositwerkstoffe) können Teilchenverbundwerkstoffe, Faserverbundwerkstoffe, Schichtverbundwerkstoffe (Laminate), Durchdringungsverbundwerkstoffe und Strukturverbundwerkstoffe umfassen. Die Werkstoffe eines Verbundwerkstoffs können polymer, metallisch, keramisch oder organisch sein.

Als Teilchenverbundwerkstoffe werden beispielsweise Schleifscheiben (keramische Teilchen in einer polymeren oder Glasmatrix), Hartmetall (keramische Teilchen in einer metallischen Matrix), Keramikverbunde (keramische Teilchen in keramischer Matrix), Spanplatten (organische Teilchen in polymerer Matrix), Beton (keramische Teilchen in keramischer Matrix) oder Polymerbeton (mineralische Teilchen in polymerer Matrix) angesehen.

Die Matrix ist das Material des Verbundwerkstoffs, in das andere Bestandteile eingebettet sind.

Faserverbundwerkstoffe im Sinne der Erfindung sind beispielsweise glasfaserverstärktes Glas, Metallmatrix-Verbunde (MMC), Faserzement, kohlefaserverstärktes Siliciumcarbid, Faser-Kunststoff-Verbunde oder Faser-KeramikVerbunde (CMC). Bevorzugte Faserverbundwerkstoffe sowohl als Werkstoff A als auch als Werkstoff B sind Faser-Kunststoff-Verbunde.

Zu den Schichtverbundwerkstoffen zählen Verbundplatten, Verbundrohre, TiGr-Composite (Werkstoff aus Titan, Kohlenstofffasern und Epoxidharz), glasfaserverstärktes Aluminium, Sandwichplatten mit Wabenkern, Bimetalle und Hylite.

Bevorzugte Werkstoffe A sind Kunststoffe, Metalle und Faserverbundwerkstoffe. Demzufolge sind Hybridbauteile aus Faserverbundwerkstoff, besonders bevorzugt Faser-Kunststoff-Verbunde, als Werkstoff B und einem Werkstoff A, der ausgewählt ist aus Kunststoffen, Metallen und Faserverbundwerkstoffen, besonders bevorzugt Faser-Kunststoff-Verbunde, bevorzugt.

Sofern sowohl Werkstoff A als auch Werkstoff B ein Faser-Kunststoff-Verbund ist, kann Werkstoff A zu Werkstoff B gleich oder verschieden sein.

Das erfindungsgemäße Hybridbauteil umfassend die Haftvermittler-Zusammensetzung, den Werkstoff A und den Werkstoff B kann darüber hinaus mit einem oder mehreren Werkstoffen C verbunden sein, welche zu dem Werkstoff A gleich oder verschieden sein können. Die weiteren Werkstoffe C können mittels Form-, Kraft- oder Stoffschluss mit dem erfindungsgemäßen Hybridbauteil verbunden sein, wobei ggf. eine

Haftvermittler-Zusammensetzung eingesetzt werden kann.

Der Werkstoff C kann ausgewählt werden aus Kunststoffen, Metallen, keramischen Massen, Holz, Glas, Verbundwerkstoffen, textilen Fasern und aus textilen Fasern hergestellten Fertigfabrikaten. Bevorzugte Werkstoffe C sind Kunststoffe, Metalle und Faserverbundwerkstoffe.

Durch entsprechende Vorversuche kann der Fachmann ermitteln, ob zur Verbindung des erfindungsgemäßen Hybridbauteils mit weiteren Materialien eine Haftvermittler-Zusammensetzung nötig erscheint, so dass optimale Haftungseigenschaften erhalten werden.

Ein weiterer Gegenstand der Erfindung ist ein Verfahren zur Herstellung eines zuvor beschriebenen Hybridbauteils. Hierbei wird die Haftvermittler-Zusammensetzung zumindest teilweise auf mindestens einen der Werkstoffe A und/oder B aufgetragen bzw. aufgelegt und die Werkstoffe A und B miteinander verbunden. Der Auftrag der Haftvermittler-Zusammensetzung (im Folgenden auch als Zusammensetzung bezeichnet) kann vollflächig oder partiell auf einen der Werkstoffe erfolgen.

Sofern ein Werkstoff C zur Herstellung eines erweiterten Hybridbauteils zum Einsatz kommt, kann zunächst ein Hybridbauteil bestehend aus den Werkstoffen A und B hergestellt werden. Anschließend kann der Werkstoff C analog zu den Methoden der Werkstoffe A bzw. B aufgebracht bzw. aufgelegt und mit dem Hybridbauteil aus A und B verbunden werden. Alternativ können die Werkstoffe A, B und C gemeinsam (in einem Schritt) zur Herstellung des erweiterten Hybridbauteils verbunden werden.

Während der Herstellung des Hybridbauteils oder des erweiterten Hybridbauteils können verschiedene Fertigungsschritte wie Urformen, Umformen oder Spanen miteinander kombiniert und in einem Prozessschritt (integrative Fertigung) durchgeführt werden. Falls Kunststoff als Werkstoff B mit Werkstoff A verbunden werden soll, wird vorzugsweise der Kunststoff umgeformt und der Werkstoff A urgeformt.

Die Zusammensetzungen können appliziert oder als Folie aufgelegt werden. Die Applikation kann kontinuierlich oder diskontinuierlich mittels Elektrotauchlackleren, elektrostatischer Sprühverfahren, Wirbelsintem, Walzen (zum Beispiel Coil Coating), Gießen, Spritzen und Sprühen, Rakeln, Pinseln, Laminieren, (Heiß-)Pressen, (Co-) Extrusion oder Spritzgießen erfolgen, wobei Sprüh-Verfahren und Walzenauftragsverfahren bevorzugt sind. Hierbei können die Zusammensetzungen ein-oder beidseitig, lokal oder vollflächig aufgebracht werden. Die eingebrannten Schichtdicken (Trockenschichtdicken) der Haftvermittler-Zusammensetzungen können 10 bis 1000 µm, vorzugsweise 20 bis 250 µm und bevorzugt 30 bis 150 µm betragen. Im Walzenverfahren sind Schichtdicken von 10 µm bis 50 µm bevorzugt.

Der Werkstoff mit der aufgebrachten Haftvermittler-Zusammensetzung kann thermisch vernetzt bzw. getrocknet werden, wobei Temperaturen von 120 °C bis 240 °C, vorzugsweise 150 °C bis 225 °C, bevorzugt 175 °C bis 200°C, für einen Zeitraum von 0,5 min bis 20 min, vorzugsweise von 1 min bis 10 min, bevorzugt 3 min bis 8 min, vorteilhaft sind. Bei Walzverfahren sind Temperaturen von 180 °C bis 240 °C sowie Zeiten von 30 s bis 3 min bevorzugt.

Die Zusammensetzungen werden somit thermisch gehärtet.

Bevorzugte Hybridbauteile werden folgendermaßen erhalten:
A) Das mit der Zusammensetzung beschichtete Metall (Werkstoff A) wird mit dem Faserverbundwerkstoff (Werkstoff B) verbunden oder
B) der mit der Zusammensetzung beschichtete Faserverbundwerkstoff (Werkstoff B) wird mit dem Kunststoff (Werkstoff A) verbunden oder
C) der mit der Zusammensetzung beschichtete Faserverbundwerkstoff (Werkstoff B) wird mit dem Metall (Werkstoff A) verbunden oder
D) der mit der Zusammensetzung beschichtete Kunststoff (Werkstoff A) wird mit dem Faserverbundwerkstoff (Werkstoff B) verbunden.
E) der mit der Zusammensetzung beschichtete Faserverbundwerkstoff (Werkstoff A) wird mit einem Faserverbundwerkstoff (Werkstoff B) verbunden.

In den Varianten A bis E sind Faser-Kunststoff-Verbunde besonders bevorzugte Faserverbundwerkstoffe. Die bevorzugten Hybridbauteile können um die Werkstoffe C erweitert werden.

### Variante A

Der Faserverbundwerkstoff (für den Verbund aus Faserverbundwerkstoff und Metall) kann beispielsweise durch Extrusion, Pultrusion, Pressen, Laminieren, Tapelegen, Wickeln, Spritzgießen oder Direktschmelzimprägnierung auf das Metall aufgebracht und der Faserverbundwerkstoff mit dem Metall physikalisch und/oder chemisch verbunden werden. Beim Kontakt des Faserverbundwerkstoffs mit der beschichteten Metalloberfläche bildet sich ein stoffschlüssiger Verbund bzw. die Haftung zwischen den Komponenten aus.

### Variante B

Der Kunststoff (für den Verbund aus Faserverbundwerkstoff und Kunststoff) kann beispielsweise durch einen Spritzgießprozess einschließlich des Spritzprägeprozesses, Extrudieren oder durch Heißpressen auf den Faserverbundwerkstoff aufgebracht und der Faserverbundwerkstoff mit dem Kunststoff physikalisch und/oder chemisch verbunden werden. Vorzugsweise wird der Kunststoff mittels Spritzgusstechnologie eingespritzt. Hierzu wird das beschichtete Faserverbundwerkstoffteil in das Spritzgusswerkzeug eingelegt und nach dem Schließen des Werkzeugs mit dem Kunststoff hinterspritzt. Beim Kontakt der Kunststoffschmelze mit der beschichteten Faserverbundwerkstoffoberfläche bildet sich ein stoffschlüssiger Verbund bzw. die Haftung zwischen den Komponenten aus. Das stoffschlüssig verbundene Bauteil kann dann aus dem Spritzgießwerkzeug entformt und weiter ver- oder bearbeitet werden.

### Variante C

Das Metall (für den Verbund aus Faserverbundwerkstoff und Metall) kann beispielsweise durch Pressen auf den Faserverbundwerkstoff aufgebracht und das Metall mit dem Faserverbundwerkstoff und/oder chemisch verbunden werden. Beim Kontakt des Metalls mit der beschichteten Faserverbundwerkstoffoberfläche bildet sich ein stoffschlüssiger Verbund bzw. die Haftung zwischen den Komponenten aus.

### Variante D

Der Faserverbundwerkstoff (für den Verbund aus Faserverbundwerkstoff und Kunststoff) kann beispielsweise durch Extrusion, Pultrusion, Pressen, Laminieren, Tapelegen, Wickeln, Spritzgießen oder Direktschmelzimprägnierung auf den Kunststoff aufgebracht und der Faserverbundwerkstoff mit dem Kunststoff physikalisch und/oder chemisch verbunden werden. Beim Kontakt des Faserverbundwerkstoffs mit der beschichteten Kunststoffoberfläche bildet sich ein stoffschlüssiger Verbund bzw. die Haftung zwischen den Komponenten aus.

### Variante E

Der eine Faserverbundwerkstoff (für den Verbund aus Faserverbundwerkstoff und Faserverbundwerkstoff) kann beispielsweise durch Extrusion, Pultrusion, Pressen, Laminieren, Tapelegen, Wickeln , Spritzgießen oder Direktschmelzimprägnierung auf den anderen Faserverbundwerkstoff aufgebracht und die beiden Faserverbundwerkstoff-Werkstoffe physikalisch und/oder chemisch verbunden werden. Beim Kontakt des einen Faserverbundwerkstoffs mit der beschichteten Oberfläche des anderen Faserverbundwerkstoffs bildet sich ein stoffschlüssiger Verbund bzw. die Haftung zwischen den Komponenten aus.

Durch die stoffschlüssige Verbindung zwischen dem Faserverbundwerkstoff als Werkstoff B und dem Werkstoff A kann eine deutlich günstige Kraftverteilung realisiert und in Folge dessen eine steifere Gesamtkonstruktion des Hybridbauteils erzeugt werden. Zudem lassen sich Kosten und Zeit bei der Herstellung einsparen.

Durch den stoffschlüssigen Verbund ergibt sich zudem der Vorteil der Gewichtsreduzierung, da durch die verbesserte Kraftübertragung und -einleitung im Gegensatz zu form- oder kraftschlüssigen Verbindungen eine geringere Menge an Kunststoff bzw. Metall eingesetzt werden kann.

Anschließend kann die Kombination aus Werkstoff B und Werkstoff A sowie ggf. Werkstoff C für 2 min bis 90 min, vorzugsweise 5 min bis 60 min, bei 120 °C bis 240 °C zur Steigerung von Verbundhaftung und Vernetzungsgrad einer Wärmebehandlung unterzogen werden. Derartig hergestellte Hybridbautele weisen eine dauerhafte Verbindung zwischen dem mit der Zusammensetzung beschichteten Material und dem Kunststoff bzw. dem Faserverbundwerkstoff auf und zeigen eine hohe mechanische und dynamische Belastbarkeit. ,

Einen weiteren Gegenstand der Erfindung bildet die Verwendung der erfindungsgemäßen Hybridbauteile als Struktur- oder Leichtbauteile oder Bauteile mit Oberflächen- oder Schutz-Funktionen. Die Hybridbauteile können zudem dekorative Funktionen übernehmen.

Die erhaltenen Hybridbauteile können als Halbzeug in Form von Platten oder Profilen für die weitere Verarbeitung zu Bauteilen oder Komponenten eingesetzt werden. Hierunter fallen beispielsweise Sandwich-Platten umfassend mindestens drei Schichten, wovon die beiden Außenschichten gleich oder verschieden sein können. Sandwich-Platten können beispielsweise einen Faserverbundwerkstoff-Kern und Außenschichten aus Metall aufweisen.

Die Hybridbauteile können verwendet werden als Sitze im Fahr- oder Flugzeug, Stoßfänger, Rahmen- und Karosserieteile wie Frontendträger, Tür-, Dach-, Boden- oder Fahrwerkskomponenten, Bestandteile von Booten wie Rumpf oder Innenausbau, Zierleisten im Fahr- oder Flugzeug, Gehäuse oder Komponenten für elektronische oder elektrotechnische Geräte wie beispielsweise Computer oder Telefone, Zweiradkomponenten wie Gabeln, Rahmen, Bremsen, Schaltung, Orthesen, Prothesen, Gelenkverbindungen, Roboterbestandteile wie Roboterarme, Handling- und Transportsysteme, Aufnahmen für Lagerschalen, Brillenrahmen, Helme oder Sitzbefestigungs-, Sitzverstärkungs- oder Sitzverkleidungselemente im Fahrzeug- und Flugzeugbau, Druckbehälter wie Gasflaschen, Stützstrukturen für Behälter, Gerüste, Ölwannen, elektronische Komponenten wie Antennen oder Batteriegehäuse, Bauteile für die Energieerzeugung wie Photovoltaik- oder Windenergieanlagen, Maschinenelemente wie Zahnräder oder Zahnstangen.

Einen weiteren Gegenstand der Erfindung bildet die Verwendung einer Zusammensetzung, die mindestens einen Schmelzklebstoff auf Copolyamidbasis enthält, als Haftvermittler zwischen einem Faserverbundwerkstoff als Werkstoff B und einem Werkstoff A zur Herstellung eines erfindungsgemäßen Hybridbauteils. Zudem kann die Zusammensetzung zur Herstellung eines erweiterten Hybridbauteils verwendet werden,

### Faserverbundwerkstoff

Ein Faserverbundwerkstoff ist ein aus Fasern und einer Matrix als Hauptkomponenten bestehender Mehrphasen- oder Mischwerkstoff. Durch gegenseitige Wechselwirkungen der beiden Komponenten erhält dieser Werkstoff höherwertige Eigenschaften als jede der beiden einzeln beteiligten Komponenten.

Geeignete Fasern sind beispielsweise anorganische Fasern wie Basaltfasem, Borfasern, Glasfasern, Keramikfasern oder Kieselsäurefasern, metallische Fasern wie Stahlfasern, organische Fasern wie Aramidfasern, Kohlenstofffasern, Polyesterfasern, Nylonfasern, Polyethylenfasern, Polymethylmethacrylat-Fasern, Polyimidfasern oder Fasern aus Polyaryletherketonen sowie Naturfasern wie Holzfasern, Flachsfasern, Hanffasern oder subtropische und tropische Fasern wie Jute-, Kenaf-, Ramie- oder Sisalfasern. Bevorzugte Fasern werden aus Glas- und Kohlenstofffasern ausgewählt.

### Die Fasern lassen sich folgendermaßen nach der Faserlänge unterteilen:

Kurzfasem weisen eine Länge von etwa 0,1 bis 1 mm auf. Fasern mit einer Länge von etwa 1 bis 50 mm werden als Langfasem bezeichnet. Beträgt die Länge mehr als 50 mm, werden die Fasern als Endlosfasern bezeichnet. Als Länge wird die anzahlgemitelte mittlere Faserlänge in der Matrix nach der Faserverbundwerkstoff-Herstellung nach DIN ISO 22314 angesehen.

Vorzugsweise werden in dem Werkstoff B Lang- oder Endlosfasern eingesetzt. Bevorzugt weisen die Fasern eine Länge von mindestens 1,5 mm, besonders bevorzugt mindestens 5 mm und ganz besonders bevorzugt von mindestens 10 mm auf. Diese Werkstoffe B sind ganz besonders bevorzugt für Hybridbauteile bzw. erweiterte Hybridbauteile mit Metallen als Werkstoff A.

Die trockenen Fasern (ohne Matrix) können als Rovings oder Halbzeuge (Faserhalbzeuge) vorliegen. Die Halbzeuge können beispielsweise durch Weben, Flechten oder Sticken hergestellt werden. Zu den Faserhalbzeugen zählen beispielsweise Gewebe, Gelege einschließlich Multiaxialgelegen, Gestricke, Geflechte, Matten, Vliese, Feinschnitt oder Abstandsgewebe.

Als Roving wird ein Bündel, Strang oder Multifilamentgarn aus parallel angeordneten Filamenten (Endlosfasern) bezeichnet. Am häufigsten werden Filamente aus Glas, Aramid oder Kohlenstoff zu Rovings zusammengefasst. Der Querschnitt eines Rovings ist meist elliptisch oder rechteckig. Allerdings gibt es auch Rovings mit einer leichten Schutzdrehung (z.B. 10 Drehungen/m), wodurch der Querschnitt runder wird.

Die Faserverbundwerkstoffe lassen sich unterteilen in Faser-Kunststoff-Verbunde, in denen Polymere als Matrix eingesetzt werden, und andere Faserverbundwerkstoffe. Die Matrix der anderen Faserverbundwerkstoffe wird üblicherweise ausgewählt aus Metallen, Keramiken und Kohlenstoff.

Als Matrix der Faser-Kunststoff-Verbunde werden üblicherweise Polymere wie Duromere, Elastomere und Thermoplaste ausgewählt, wobei Thermoplaste bevorzugt sind. Die Polymere können Füllstoffe wie Talkum oder Kreide enthalten.

Besonders bevorzugte Thermoplaste sind z.B. Polybutylenterephthalate, Polyaryletherketone wie Polyetheretherketone, Polyolefine wie Polypropylen, Polyphenylensulfid, Polycarbonate, Polyetherimide, Polyurethane, aliphatische oder teilaromatische Polyamide, Kunststoffgemische enthaltend Polyamide, Styrolpolymere wie Acrylnitril-Butadien-Styrol, Polyalkyl(meth)acrylate wie Polymethylmethacrylat sowie Mischungen der vorgenannten Kunststoffe. Mischungen aus Polycarbonaten und Acrylnitril-Butadien-Styrol sind ebenfalls geeignet. Bevorzugt sind aliphatische oder teilaromatische Polyamide, Kunststoffgemische enthaltend Polyamide, Polybutylenterephthalate, Polyolefine sowie Mischungen der zuvor genannten Polymere, wobei Polyamide besonders bevorzugt sind.

Bevorzugte Polyamide werden ausgewählt aus der Gruppe bestehend aus Polyamid 6, Polyamid 6.6, Polyamid 610, Polyamid 612, Polyamid 1010, Polyamid 11, Polyamid 12, Polyamid 101212, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen. Die Polyamide können Füllstoffe enthalten. Geeignete Polyamide werden beispielsweise unter der Bezeichnung VESTAMID LX9012 von der Fa. Evonik Industries angeboten.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3-,3'-Dimethyl- 4,4'-bis(aminocyclohexyl)-methans, aus Laurinlactam, Isophthalsäure und dem Isomerengemisch des 3-,3'-Dimethyl- 4,4'-bis(aminocyclohexyl)-methans oder aus Tetradecandisäure und dem Isomerengemisch des 3-,3'-Dimethyl- 4,4'-bis(aminocyclohexyl)-methans. Derartige Polyamide werden beispielsweise in DE-A-102007062063 oder WO-A-2008025729 beschrieben. Optisch transparente Polyamide werden beispielsweise unter den Handelsnamen Trogamid (Evonik, Deutschland), Grilamid (EMS-Chemie, Deutschland) oder Durethan (Lanxess, Deutschland) angeboten.

Die Faserverbundwerkstoffe umfassen weiterhin eigenverstärkte Thermoplaste (Kunststofffasem in Kunststoffmatrix der gleichen Zusammensetzung).

Die zuvor genannten thermoplastischen Matrix-Polymere können zudem vernetzt sein.
Beispielsweise kann die Vernetzung während der Herstellung des Faserverbundwerkstoffs oder in einem Nachfolgeschritt erfolgen.

Geeignete Duroplasten sind beispielsweise Epoxidharze, ungesättigte Polyesterharze, Vinylesterharze, Phenacrylatharze, Phenolharze, Methacrylatharze oder Isocyanatharze (vgl. G. Ehrenstein: Faserverbund-Kunststoffe, Hanser-Verlag, 2. Auflage 2006, Seite 53 ff., ISBN 978-3-446-22716-3).

Besonders bevorzugte Faserverbundwerkstoffe werden aus kohlenstofffaserverstärkten Kunststoffen und glasfaserverstärkten Kunststoffen ausgewählt.

Die Fasern können in der Matrix gerichtet oder ungerichtet, vorzugsweise gerichtet, sein. Beispiele für Faserverbundwerkstoffe umfassend gerichtete Fasern sind UD-Gelege, UD-Tapes (UD = unidirektional) oder Gewebe. Ungerichtete Fasern sind beispielsweise in Vliesen enthalten.

Die Faser-Kunststoff-Verbunde können weiterhin als Faser-Matrix-Halbzeuge vorliegen. Diese können vorimprägniert sein. Vorimprägnierte Faser-Matrix-Halbzeuge umfassen insbesondere thermoplastische und duroplastische Halbzeuge. Die vorimprägnierte Faser-Matrix-Halbzeuge können in Platten-, Band- oder Strangform vorliegen.

Zu den thermoplastischen Halbzeugen zählen beispielsweise glasmattenverstärkte Thermoplaste (GMT), langfaserverstärkte Thermoplaste (LFG) oder thermoplastische preimpregnated fibres (Prepregs). Plattenförmige thermoplastische Prepregs werden auch als Organobleche bezeichnet (vgl. Tagungsband zur Fachtagung "Thermoplastische Faserverbundkunststoffe", 15.-16.05.2013 in Fürth, Carl Hanser Verlag München 2013, ISBN 978-3-446-43864-4, Seiten 5, 13 und17).

Duroplastische Halbzeuge sind zum Beispiel Sheet Molding Compounds (SMC), Bulk Molding Compounds (BMC) und duroplastische preimpregnated fibres (Pregreg).

Der Faserverbundwerkstoff kann vor dem Aufbringen des Werkstoffs A beschnitten, umgeformt oder verformt werden. Die Um- bzw. Verformung kann vor oder nach dem Auftrag der Haftvermittler-Zusammensetzung erfolgen.

Die Herstellung von Faserverbundwerkstoffen aus den zuvor beschriebenen Fasern und der Matrix ist dem Fachmann bekannt.

### Metalle

Geeignete Metalle sind z.B. eisenhaltige Legierungen wie Stahl, Aluminium, Kupfer, Magnesium, Titan sowie Legierungen der zuvor genannten Metalle. Bevorzugte Metalle sind Stahl, Titan, Aluminium sowie Legierungen der zuvor genannten Metalle, besonders bevorzugt Stahl und Aluminium sowie Aluminium-Legierungen. Die Metalle können auch als Schaum oder in einer Wabenstruktur vorliegen.

Bevorzugte Stähle sind unlegierte Stähle oder Edelstähle. Stähle mit einem Schutzüberzug sind besonders bevorzugt. Geeignete Überzüge sind beispielsweise Überzuge aus Zink, Aluminium-Silizium, Aluminium-Zink, Zink-Aluminium, Zink-Eisen oder Zink-Magnesium, wobei Aluminium-Silizium, Zink-Aluminium und Zink bevorzugt sind. Die Zusammensetzung der Überzüge ist beispielsweise definiert in der Broschüre "Schmelztauchveredeltes Band und Blech" des Stahl-Informations-Zentrums im Stahl-Zentrum, Düsseldorf, Deutschland, Ausgabe 2010.

Vor dem Aufbringen des Faserverbundwerkstoffs (Werkstoff B) kann das Metall beschnitten, umgeformt oder verformt werden. Die Um- bzw. Verformung kann vor oder nach dem Auftrag der Haftvermittler-Zusammensetzung erfolgen.

Vor der Applikation der Haftvermittler-Zusammensetzungen kann eine Konversionsschicht zur Vorbehandlung der Oberfläche auf das Metall vollflächig oder partiell aufgebracht werden. Das Metall kann vor der Vorbehandlung gereinigt werden oder bereits metallische Schutzüberzüge aufweisen. Die Metallreinigung ist dem Fachmann bekannt.

Die Vorbehandlung kann mit Konvertierungsmitteln erfolgen. Die Konvertierungsmittel werden üblicherweise als wässrige Lösungen eingesetzt. Als Konvertierungsmittel kommen handelsübliche Passivierungsmittel und Produkte für die Konversionsbehandlung in Frage, wie zum Beispiel Zinkphosphatierungsmittel, Eisenphosphatierungsmittel sowie phosphorsäurehaltige Lösungen enthaltend Titanate oder Zirconate. Chromatierungsmittel sind ebenfalls technisch denkbar, sie sind jedoch auf Grund ihrer gesundheitsgefährdenen Eigenschaften weniger bevorzugt.

Weiterhin kann die Konversionsschicht erhalten werden durch eine flammenpyrolytische Abscheidung von amorphem Silicat auf der Metalloberfläche. Die zu behandelnde Ober-fläche wird durch den oxidierenden Bereich einer Gasflamme geführt, in welche eine siliciumhaltige Substanz, der Precursor, eindosiert ist. Dieser verbrennt und der Rückstand scheidet sich als amorphes Silicat als festhaftende Schicht in Schichtdicken von etwa 20 bis 40 nm auf der Oberfläche ab.

Zur Behandlung einer Oberfläche wird aus einem Arbeitsgas ein Plasmastrahl oder aus einem Brenngas ein Flammstrahl erzeugt, mit dem die Oberfläche bestrichen wird, wobei mindestens ein Precursormaterial dem Arbeitsgas und/ oder dem Plasmastrahl oder dem Brenngas und/oder dem Flammstrahl zugeführt und im Plasmastrahl oder Flammstrahl zur Reaktion gebracht wird, wobei mindestens ein Reaktionsprodukt mindestens eines der Precursoren auf der Oberfläche und/oder auf mindestens einer auf der Oberfläche angeordneten Schicht abgeschieden wird. Ein derartiges Verfahren ist beispielsweise in DE-A-102009042103 beschrieben.

### Kunststoff

Das Aufbringen des Kunststoffs auf den Werkstoff B kann in bekannter Weise, z. B. durch Spritzgießen, Pressen, Laminieren, Hinterspritzen oder (Co-)Extrudieren erfolgen, wobei der Werkstoff bereits mit der Zusammensetzung beschichtet sein sollte. Vorzugsweise wird der Kunststoff mittels Spritzgusstechnologie eingespritzt. Der Werkstoff B kann in einem Bereich von 50 °C bis 250 °C vortemperiert sein, um die Temperatur im Kontaktbereich zum Kunststoff z.B. beim Überspritzen oder bei Coextrusion für eine gute Verbindung zwischen Haftvermittler und Kunststoff anzuheben.

Alternativ kann der Kunststoff bereits vorliegen, ggf. mit der Zusammensetzung beschichtet sein und anschließend mit dem Werkstoff B verbunden werden.

Geeignete Kunststoffe enthalten z.B. Polybutylenterephthalate, Polyolefine, Polyetherimide, Polycarbonate, Polyurethane, aliphatische oder teilaromatische Polyamide, Kunststoffgemische enthaltend Polyamide, Styrolpolymere wie Acrylnitril-Butadien-Styrol, Polyalkyl(meth)acrylate wie Polymethylmethacrylat, Polymethacrylimid (bspw. Rohacell von Evonik, Deutschland) sowie Mischungen der vorgenannten Kunststoffe. Mischungen aus Polycarbonaten, Acrylnitril-Butadien-Styrol oder Polyetherblockamide sind ebenfalls geeignet. Bevorzugt sind aliphatische oder teilaromatische Polyamide, Kunststoffgemische enthaltend Polyamide, Polybutylenterephthalate, Polyolefine sowie Mischungen der zuvor genannten Kunststoffe, wobei Polyamide besonders bevorzugt sind. Die Kunststoffe können verstärkt sein (Verstärkungsstoffe), wobei glasfaser- (GF) oder kohlenstofffaserverstärkte (CF) Kunststoffe bevorzugt sind. Zudem können die Kunststoffe Füllstoffe wie Talkum oder Kreide enthalten. Die Verstärkungsstoffe sind vorzugsweise ungerichtet in ihrer Matrix verteilt. Zudem weisen die Verstärkungsstoffe vorzugsweise eine Länge von weniger als 5 mm, bevorzugt weniger als 1 mm auf.

Bevorzugte Polyamide werden ausgewählt aus der Gruppe bestehend aus Polyamid 6, Polyamid 6.6, Polyamid 610, Polyamid 612, Polyamid 1010, Polyamid 11, Polyamid 12, Polyamid 101212, Polyphthalamiden oder Mischungen auf Basis dieser Polyamide. Besonders bevorzugte Polyamide sind ausgewählt aus Polyamid 6, Polyamid 6.6, Polyamid 610, Polyamid 1010 sowie deren Mischungen. Die Polyamide können Verstärkungsstoffe, Füllstoffe oder Mischungen dieser Stoffe enthalten. Geeignete Polyamide werden beispielsweise unter der Bezeichnung VESTAMID LX9012 oder LGF30 von der Fa. Evonik Industries angeboten.

### Haftvermittler-Zusammensetzung

Die Haftvermittler-Zusammensetzung enthält mindestens einen Schmelzklebstoff auf Copolyamidbasis. Die Haftvermittler-Zusammensetzung kann in Lösung, in Dispersion oder als Feststoff vorliegen.

Der Schmelzklebstoff enthält mindestens ein Copolyamid. Das Copolyamid ist aus Amid-Monomeren und Comonomeren herstellbar. Durch die Comonomere werden vorzugsweise Copolyamide erhalten, die einen Schmelzpunkt zwischen 95 °C und 175 °C aufweisen.

Die Amid-Monomeren sind vorzugsweise ausgewählt sind aus der Gruppe bestehend aus Laurinlactam, Amionoundecansäure oder Mischungen daraus. Copolyamide auf Basis von Laurinlactam sind besonders bevorzugt.

Die Comonomere werden vorzugsweise ausgewählt aus aliphatischen oder cycloaliphatischen Diaminen, aliphatischen oder cycloaliphatischen Dicarbonsäuren, Lactamen und Mischungen daraus. Die Comonomere enthalten, unabhängig voneinander, vorzugsweise 4 bis 18 C-Atome. Geeignete Dicarbonsäuren sind beispielsweise Adipinsäure, Sebazinsäure oder Dodecandisäure. Geeignete Diamine stellen beispielsweise Hexamethylendiamin, Decamethylendiamin oder Dodecamethylendiamin dar. Lactame wie Caprolactam können ebenfalls als Comonomer eingesetzt werden.

Bevorzugte Comonomere sind Caprolactam und ein Polymer aus Adipinsäure und Hexamethylendiamin, vorzugsweise in einem Massenverhältnis von 1:1.

Durch einen Überschuss an Amingruppen der Diamine resultieren Copolyamide mit reaktiven Aminoendgruppen.

Die Copolyamide weisen vorzugsweise Aminzahlen von 75 bis 400 mmol/kg auf.

Das gewichtsmittlere Molekulargewicht der Copolyamide ist vorzugsweise in einem Bereich von 15000 bis 70000 g/mol anzufinden (gemessen mittels Gelpermeationschromatographie (GPC) gegen einen Polystyrolstandard). Die relative Lösungsviskosität beträgt vorzugsweise 1,2 bis 1,8 (Bestimmung nach ISO 307).

Die Copolyamide bzw. der Schmelzklebstoff können in den Zusammensetzungen in Lösung, in Dispersion oder in Pulverform eingesetzt werden, wobei die Pulverform bevorzugt ist. Ein geeignetes Lösemittel ist beispielsweise m-Kresol.

Die Pulverform kann beispielsweise durch Vermahlen erhalten werden, wobei der Korndurchmesservorzugsweise < 200 µm, bevorzugt < 100 µm und besonders bevorzugt < 70 µm ist.

In einer bevorzugten Ausführungsform der Erfindung sind dem Copolyamid mindestens eine Epoxidkomponente und mindestens ein blockiertes Polyisocyanat als weitere Bestandteile des Schmelzklebers zugesetzt.

Als Epoxidkomponente können beispielsweise Verbindungen auf Basis von Diolen, Polyolen oder Dicarbonsäuren eingesetzt werden, wobei Diole bevorzugt und entsprechende Phenol-Diol-Derivate besonders bevorzugt sind. Ganz besonders bevorzugte Phenol-Diol-Derivate sind Bisphenole, insbesondere Bisphenol A. Die Epoxidkomponente wird üblicherweise erhalten durch Umsetzung mit Epichlorhydrin. Typischerweise weist die Epoxidkomponente einen Epoxy-Index von 1-2 Eq/kg auf. Das Epoxid-Äquivalenzgewicht liegt vorzugsweise zwischen 875 und 1000 g/mol. Die Dichte kann 1,1 bis 1,3 kg/L, vorzugsweise 1,15 bis 1,25 kg/L betragen. Die Glasübergangstemperatur ist üblicherweise im Bereich von 40 bis 60 °C, vorzugsweise 45 bis 55 °C angesiedelt. Der Schmelzklebstoff enthält die Epoxidkomponente vorzugsweise in einem Anteil von 2,5 bis 10 Gew.-%, bevorzugt 4 bis 6 Gew.-%, jeweils bezogen auf das Gesamtgewicht des Schmelzklebstoffs.

Der Anteil an blockiertem Polyisocyanat beträgt vorzugsweise 2,5 bis 15 Gew.-%, bevorzugt 4 bis 6 Gew.-%, jeweils bezogen auf das Gesamtgewicht des Schmelzklebstoffs.

Die blockierte Polyisocyanatkomponente kann aromatisch, aliphatisch oder cycloaliphatisch sein, wobei aliphatische oder cycloaliphatische Polyisocyanate bevorzugt sind. Blockierungsmittel für Isoeyanate wie Oxime, Phenole oder Caprolactam sind dem Fachmann bekannt. Bevorzugt liegt die Polyisocyanatkomponente als Uretdion vor, um blockiert zu sein. Typische Beispiele werden unter der Bezeichnung VESTAGON von Evonik Industries, Deutschland, vertrieben.

Die Haftvermittler-Zusammensetzung kann selbst- oder fremdvernetzende Bindemittel enthalten (zu dem Begriff "Bindemittel" vgl. Römpp Lexikon Lacke und Druckfarben, Georg Thieme Verlag, Stuttgart, New York, 1998, Bindemittel, Seiten 73 und 74). Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln komplementäre reaktive funktionelle Gruppen enthalten sind, die miteinander reagieren und so zu einer Vernetzung führen. Oder aber die Bindemittel enthalten reaktive funktionelle Gruppe die "mit sich selbst" reagieren. Als fremdvernetzend werden dagegen solche Bindemittel-Systeme bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, Härtung, Seiten 274 bis 276, insbesondere Seite 275, unten, verwiesen.

Die Haftvermittler-Zusammensetzung kann weiterhin elektrisch leitfähige Stoffe enthalten, die ausgewählt sind aus Graphit, Ruß, Zinkstaub oder Mischungen dieser Stoffe, wodurch elektrisch leitfähige Haftvermiftler-Zusammensetzungen entstehen.

Der Metall-Kunststoff-Verbund umfassend Beschichtungen elektrisch leitfähiger Haftvermittler-Zusammensetzungen kann mit einer kathodischen Tauchlackierung (KTL) versehen werden.

Die Haftvermittler-Zusammensetzungen können weiterhin Farbmittel, vorzugsweise Pigmente, enthalten. Darüber hinaus können funktionelle Pigmente wie Korrosionsschutzpigmente enthalten sein.

Die Haftvermittler-Zusammensetzung kann weiterhin funktionalisierte Polyolefine enthalten, um die Haftung zu Polyolefinen zu verbessern. Derartige Zusammensetzungen werden beispielsweise in WO 2010/136241 beschrieben.

Geeignete Schmelzkleber werden beispielsweise von der Firma Evonik Industries, Deutschland, unter der Bezeichnung VESTAMELT angeboten. Beispielsweise seien die Typen X1027-P1, X1038-P1, X1316-P1 und X1333-P1 genannt.

Nachfolgend wird die vorliegende Erfindung anhand von Beispielen näher erläutert. Alternative Ausführungsformen der vorliegenden Erfindung sind in analoger Weise erhältlich.

### Beispiele

### A) Hybridbauteil aus Faserverbundwerkstoff und Metall

### Aufbau: Metall - Haftvermittler-Beschichtung - Faserverbundwerkstoff - Kunststoff (erweitertes Hybridbauteil)

Unvorbehandelte Blechplatten (Blechstärke 1,5 mm) aus Stahl ZSTE 800 nach DIN EN10142 wurden per Konvertierungsmittel phosphatiert. Als Konvertierungsmittel wurde Granodine 958 A der Firma Henkel, Deutschland, enthaltend unter anderem Phosphorsäure und Zinkbis(dihydrogenphosphat) und eine Nachpassivierung aus Deoxylyte 54NC eingesetzt.

Nach dem Aufbringen der Konversionslösurig gemäß Herstellerangabe mittels Tauchen in die Lösungen und Trocknen der Schichten wurden die Metallproben mit einer Haftvermittler-Zusammensetzung beschichtet. Als Zusammensetzung wurden appliziert
- H1: Lösemittelhaltiger Sprühlack enthaltend ca. 30 Gew.-% eines Schmelzklebstoffs auf Copolyamidbasis, enthaltend eine Epoxidkomponente und ein blockiertes Polyisocyanat, und
- H2: Schmelzklebstoff auf Copolyamidbasis (Vestamelt X1333-P1 der Fa. Evonik), enthaltend eine Epoxidkomponente und ein blockiertes Polyisocyanat als Pulverbeschichtung.

Die beiden Zusammensetzungen H1 und H2 enthalten das gleiche Copolyamid.

Das Lacksystem wurde im Sprühverfahren mit einer Schichtdicke von 50 - 70 µm und die Pulverbeschichtung elektrostatisch mit einer Schichtstärke von 50-100 µm aufgetragen. Der Sprühlack wurde für 5 min bei 175 °C und die Pulverbeschichtung für 5 min bei 200°C eingebrannt. Die beschichteten Bleche wurden hierzu in einen vorgeheizten Autoklaven (Ofen) gelegt.

Nach dem Einbrennvorgang wurden die Blechtafeln mit einer Schlagschere in, für die Spritzgusskavität passende, Blechstreifen mit den Maßen 20,0 mm x 50,0 mm (Toleranz +0 -0,2 mm) geschnitten.

Als Einleger aus Faserverbundwerkstoff wurden endlos-kohlefaserverstärkte UD-Tapes mit einer Matrix aus Polyamid 12. Die UD-Tapes besitzen eine Matrix aus Polyamid 12. Die UD-Tapes wurden ebenfalls auf ein für die Spritzgusskavität passendes Maß von ca. 20,0 mm x 50,0 mm mittels einer Schlagschere zugeschnitten.

Die Blechstreifen wurden dann zur Herstellung der endgültigen Hybridbauteile mit und ohne Faserverbundwerkstoff-Einleger in ein temperiertes Spritzgießwerkzeug eingelegt und mit einem thermoplastischen Kunststoff überspritzt. Die Faserverbundwerkstoff-Einleger wurden dabei lose auf den Blechstreifen abgelegt. Als Kunststoffkomponente wurde ein Polyamid 12 GF30 (VESTAMID L-GF30 der Firma Evonik Industries AG, Deutschland) eingesetzt.

Die Verarbeitung des Kunststoffs erfolgte auf einer Arburg 370V bei einer Massetemperatur von 280°C, einer Werkzeugtemperatur von 120°C und bei einer Einspritzgeschwindigkeit von ca. 30 ccm/s. Wichtig war hierbei eine Einspritzverzögerung von ca. 30 s vorzusehen, damit der eingelegte Blechstreifen und Composite-Einleger auf Werkzeugtemperatur vorgewärmt werden konnten, wodurch die Haftung positiv begünstigt wurde. Der Überlappungsbereich zwischen Kunststoff und Metall betrugen ca. 20 mm x 20 mm. Der Probekörper besaß eine Gesamtlänge von ca. 100mm. Die Dicke des überspritzten Kunststoffs betrug ca. 6 mm, im Bereich der Überlappung ca. 4 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 15 mm / Seite geprüft.

| **Beispiel** | **Faserverbundwerkstoff** | **Haftvermittler** | **Haftung in MPa** |
|---|---|---|---|
| 1 | ohne | ohne | 0 |
| 2 | ohne | H1 | 8,8 |
| 3 | mit | ohne | 0 |
| 4* | mit | H1 | 8,5 |
| 5 | ohne | ohne | 0 |
| 6 | ohne | H2 | 10,6 |
| 7 | mit | ohne | 0 |
| 8* | mit | H2 | 9,3 |

| | | | |
|---|---|---|---|
| * erfindungsgemäß | | | |

Die Ergebnisse zeigen, dass durch eine Haftvermittlerbeschichtung der Metallkomponente eine erhöhte Haftfestigkeit zwischen UD-Tape und Metall in Hybridbauteilen gegenüber Systemen ohne Haftvermittler erreicht werden kann. Zudem wird dargelegt, dass durch den Einsatz des Faserverbundwerkstoffs keine signifikante Verringerung der Haftung erreicht wird.

### B) Hybridbauteil aus Faserverbundwerkstoff und Kunststoff

### Aufbau: Faserverbundwerkstoff- Haftvermittler- Kunststoff

Es wurden 1,0 mm starke Faserverbundwerkstoff-Platten aus VESTAMID L1600 (Polyamid 12) und Kohlenstofffasergewebe mit Endlosfasern eingesetzt. Das Gewebe besitzt ein Gewicht von ca. 285 g/m² mit einer Orientierung von 0°/90°. Die Faserverbundwerkstoff-Platten wurden im Pressverfahren hergestellt.

Die Platten wurden mit je einer Haftvermittler-Zusammensetzung beschichtet. Als Zusammensetzung wurden appliziert
- H1: Schmelzklebstoff auf Copolyamidbasis (Vestamelt X1333-P1 der Fa.
   Evonik), enthaltend eine Epoxidkomponente und ein blockiertes Polyisocyanat als Pulverbeschichtung, und
- H2: Schmelzklebstoff auf Copolyamidbasis (Vestamelt Z2366-P1 der Fa. Evonik), enthaltend eine Epoxidkomponente und ein blockiertes Polyisocyanat sowie ein funktionalisiertes Polyolefin als Pulverbeschichtung.

Die beiden Zusammensetzungen H1 und H2 enthalten das gleiche Copolyamid.

Die Pulverbeschichtung wurde elektrostatisch mit einer Schichtstärke von 50 - 70 µm aufgetragen und für 5 min bei 160°C eingebrannt. Die beschichteten Bleche wurden hierzu in einen vorgeheizten Autoklaven (Ofen) gelegt.

Nach dem Einbrennvorgang wurden die Faserverbundwerkstoff-Platten mit einer Schlagschere in, für die Spritzgusskavität passende, Blechstreifen mit den Maßen 24,9 mm x 59,8 mm (Toleranz ±0,2 mm) geschnitten.

Die Faserverbundwerkstoff-Platten wurden dann zur Herstellung der endgültigen

Hybridbauteile in ein temperiertes Spritzgießwerkzeug eingelegt und mit einem thermoplastischen Kunststoff überspritzt. Als Kunststoffkomponenten wurden ein Polyamid 6 GF30 (Durethan BKV30 H2.0 der Firma Lanxess, Deutschland) als K1 und ein Polypropylen LGF30 (CELSTRAN PP-GF30-05CN01 der Fa. TICONA) als K2 eingesetzt.

Die Verarbeitung des Kunststoffs erfolgte auf einer Arburg Spritzgießmaschine Typ Allrounder 420 C bei einer Massetemperatur von 280°C, einer Werkzeugtemperatur von 80°C und 120°C und bei einer Einspritzgeschwindigkeit von ca. 30 ccm/s für das Polyamid 6 GF30. Für das Polypropylen LGF30 wurde eine Massetemperatur von 270°C, eine Werkzeugtemperatur von 70°C und eine Einspritzgeschwindigkeit von ca. 30 ccm/s verwendet. Wichtig war hierbei eine Einspritzverzögerung von ca. 15-30 s vorzusehen, damit die eingelegte Faserverbundwerkstoff-Platte auf Werkzeugtemperatur vorgewärmt werden konnte, wodurch die Haftung positiv begünstigt wurde. Der Überlappungsbereich zwischen Kunststoff und Faserverbundkunststoff betrug ca. 25 mm x 25 mm. Der Probekörper besaß eine Gesamtlänge von ca. 130mm. Die Dicke des überspritzten Kunststoffs betrug 4 mm. Nach dem Entformen wurden die einzelnen Zug-Scher-Probekörper vom Anguss getrennt.

Die so erzeugten Prüfkörper wurden bei 50 % relativer Luftfeuchte für mindestens für 24 h bei 23 °C gelagert, um einen einheitlichen Konditionierungszustand zu gewährleisten. Die Probekörper werden dann in eine Standard-Zugprüfmaschine Zwick/Roell Z-020 eingespannt und mit einer Geschwindigkeit von 5 mm/min bei 23 °C mit einem Abstand zwischen den Klemmen und dem Überlappungsbereich von ca. 25 mm / Seite geprüft.

| **Beispiel** | **Kunststoff** | **Haftvermittler** | **Haftung in MPa** |
|---|---|---|---|
| 9 | K1 | ohne | 2,6 |
| 10 | K1 | ohne | 3,6 |
| 11* | K1 | H1 | 9,3 |
| 12* | K1 | H1 | 12,4 |
| 13 | K2 | ohne | 0,6 |
| 14* | K2 | H2 | 5,2 |

| | | | |
|---|---|---|---|
| * erfindungsgemäß | | | |

Die Ergebnisse zeigen, dass durch die Haftvermittlervarianten eine erhöhte Haftfestigkeit zwischen Faserverbundwerkstoff-Platten und artfremden Kunststoff in Hybridbauteilen gegenüber Systemen ohne Haftvermittler erreicht werden kann.

## Patentansprüche

1. Hybridbauteil umfassend mindestens einen Faserverbundwerkstoff als Werkstoff B und mindestens eine Werkstoff A, wobei der Werkstoff A ausgewählt ist aus Kunststoffen, Metallen, keramischen Massen, Holz, Glas, Verbundwerkstoffen, textilen Fasern und aus textilen Fasern hergestellten Fertigfabrikaten, und wobei der Werkstoff A mit dem Werkstoff B durch mindestens eine Beschichtung einer Haftvermittler-Zusammensetzung, die mindestens einen Schmelzklebstoff auf Copolyamidbasis enthält, verbunden ist.

2. Hybridbauteil nach Anspruch 1, **dadurch gekennzeichnet, dass** der Faserverbundwerkstoff des Werkstoffs B ein Faser-Kunststoff-Verbund ist.

3. Hybridbauteil nach Anspruch 2, **dadurch gekennzeichnet, dass** die Fasern des Faser-Kunststoff-Verbund aus Kohlenstoff-Fasern und Glasfasern ausgewählt werden.

4. Hybridbauteil nach einem der vorherigen Ansprüche, **dadurch gekennzeichnet, dass** der Werkstoff A ausgewählt ist aus Kunststoffen. Metallen und Faserverbundwerkstoffen.

5. Hybridbauteil nach einem der vorherigen Ansprüche, **dadurch gekennzeichnet, dass** das Hybridbauteil mindestens einen weiteren Werkstoff C, ausgewählt ist aus Kunststoffen, Metallen, keramischen Massen, Holz, Glas, Verbundwerkstoffen, textilen Fasern und aus textilen Fasern hergestellten Fertigfabrikaten, umfasst.

6. Verfahren zur Herstellung eines Hybridbauteils nach einem der vorherigen Ansprüche, **dadurch gekennzeichnet, dass** die Haftvermittler-Zusammensetzung zumindest teilweise auf den Werkstoff A, den Werkstoff B oder auf beiden Werkstoffen aufgetragen bzw. aufgelegt wird und die Werkstoffe A und B miteinander verbunden werden.

7. Verfahren nach Anspruch 6, **dadurch gekennzeichnet, dass** ein Werkstoff C auf das Hybridbauteil aufgetragen bzw. aufgelegt und der Werkstoff C mit dem Hybridbauteil verbunden wird.

8. Verfahren nach Anspruch 6, **dadurch gekennzeichnet**, däss ein Werkstoff C gemeinsam mit den Werkstoffen A und B verbunden werden.

9. Verwendung der Hybridbauteile nach einem der Ansprüche 1 bis 5 als Strukturbauteil, Leichtbauteil, Bauteil mit Oberflächen- oder Schutzfunktion oder als dekoratives Bauteil.

10. Verwendung einer Zusammensetzung, die mindestens einen Schmelzklebstoff auf Copolyamidbasis enthält, als Haftvermittler zwischen einem Faserverbundwerkstoff als Werkstoff B und einem Werkstoff A, zur Herstellung eines Hybridbauteils nach einem der Ansprüche 1 bis 5.
